# EUROPÄISCHE PATENTSCHRIFT

(11) **EP 1 558 851 B1**
(45) Veröffentlichungstag und Bekanntmachung des Hinweises auf die Patenterteilung: **21.01.2009**
(21) Anmeldenummer: 03769364.5
(22) Anmeldetag: 09.10.2003
(51) Int. Cl.: F16B 25/00

(54) **SCHRAUBE FÜR HARTE WERKSTOFFE**
SCREW FOR HARD MATERIALS
VIS POUR MAT RIAUX DURS

(30) Priorität: 07.11.2002 DE 10252774
(43) Veröffentlichungstag der Anmeldung: 03.08.2005
(73) Patentinhaber: Adolf Würth GmbH & Co. KG, 74653 Künzelsau (DE)
(72) Erfinder: WUNDERLICH, Andreas, 74653 Kupferzell (DE)
(74) Vertreter: Patentanwälte Ruff, Wilhelm, Beier, Dauster & Partner
(86) Internationale Anmeldenummer: PCT/EP2003/011157
(87) Internationale Veröffentlichungsnummer: WO 2004/042240

(56) Entgegenhaltungen:
- EP-A- 0 433 484
- EP-A- 0 501 860
- DE-A- 4 206 440

## Beschreibung

Die Erfindung geht aus von einer Schraube für harte Werkstoffe, insbesondere Mauerwerk und Beton. Solche Schrauben werden auch als Betonschrauben bezeichnet. Sie werden in ein vorher gebohrtes Loch innerhalb des Mauerwerks eingeschraubt, wobei sich ihr Gewinde dann ein Gegengewinde in der Wand des Bohrlochs herstellt. Die Verwendung von Betonschrauben hat den Vorteil, dass mit Ausnahme des Bohrens des Bohrlochs keine weiteren Maßnahmen erforderlich sind, und dass die Schraube nach dem Einschrauben sofort belastbar ist.

Bei einer bekannten Betonschraube dieser Art (EP 433484 B) ist ein Gewinde vorhanden, dessen Gewindeflanken einen spitzen Winkel miteinander einschließen. In der Gewindekante sind Kerben mit einer Schneidkante vorhanden, wobei die Schneidkante mit der Gewindekante fluchtet.

Bei einer weiteren Betonschraube dieser Art (DE 19735280) verlaufen die Gewindeflanken des Gewindes parallel zueinander und senkrecht zur Längsachse des Schraubenschafts.

Eine ähnliche Betonschraube ist aus EP 916030 bekannt. Auch hier sind Kerben vorhanden, die etwa V-förmig ausgebildet sind, wobei die Vorder- und Hinterkante der Kerbe symmetrisch zu einem Radius durch die Längsachse der Schraube verlaufen. Eine Schränkung der Zähne ist aus DE 197 24 052 bekannt. Dies hat jedoch den Nachteil, dass eine solche Schränkung bei Schrauben nicht wirtschaftlich herstellbar ist. In dem unmittelbar an den Schaft angrenzenden Bereich des Gewindegangs ist eine Verbreiterung des Gewindegangs möglich. Es handelt sich um denjenigen Bereich des Gewindes, der nicht in die Wand des Bohrlochs eingreift. Zwischen der Außenseite des Schafts und der Wand des Bohrlochs muss ein Ringspalt frei bleiben.

Weiterhin bekannt ist eine Gipskartonplattenschraube (EP 501860) mit einem zylindrischen hohlen Schraubenschaft, auf dem ein Gewinde mit einem von der Spitze zum Schraubenkopf kontinuierlich zunehmenden Außendurchmesser angeordnet ist. Das vordere Ende des Schraubenschafts weist eine Bohrkrone zum Herstellen eines Lochs in dem Material auf. Das Gewinde ist an einer Stelle des Umfangs immer in die gleiche Richtung versetzt ausgebildet.

Der Erfindung liegt die Aufgabe zu Grunde, eine einfach herzustellende, leicht einzuschraubende mit großer Haltekraft versehene Schraube zu schaffen.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Die Schränkung ist eine Maßnahme, die bei Sägeblättern üblich ist. Dabei sind die Zähne eines Sägeblatts abwechselnd nach links und rechts aus einer mittleren Lage heraus gebogen. Bei einem Gewinde sind solche Maßnahmen bislang nicht bekannt. Während Sägen in erster Linie dazu dienen, einen Schnitt herzustellen, der breiter sein soll als der Rest des Sägeblatts, soll bei Betonschrauben ein fester Sitz der Schraube erreicht werden. Erstaunlicherweise geht dies mit einem geschränkten Gewinde auch, da sich das Gewinde bzw. seine Außenkanten beim Einschrauben mit der Zeit, das heißt mit fortschreitender Einschraubtiefe, abschabt.

In Weiterbildung der Erfindung kann vorgesehen sein, dass das Gewinde ein Sägezahnprofil aufweist. Während die Schränkung eine Maßnahme ist, die dann sichtbar ist, wenn man quer zur Schraube blickt, ist das Sägezahnprofil eine Profilierung des Gewindes, die sichtbar ist, wenn man in Längsrichtung der Schraube blickt. Bei den Kerben, die zwischen den Zähnen des Sägezahnprofils stehen bleiben, handelt es sich um unsymmetrische Kerben, bei denen vorzugsweise die Vorderkante der Sägezähne, also die Rückseite der Kerbe, etwa radial zu der Schraubenlängsachse verläuft.

In nochmaliger Weiterbildung der Erfindung kann vorgesehen sein, dass die Gewindekante abgeflacht als schmale Gewindefläche ausgebildet ist. Es wird also keine scharfe Gewindekante gebildet, sondern eine kantenartige Fläche, die dazu führt, dass der Querschnitt des Gewindes größer ist, so dass es höhere Auszugskräfte ermöglicht.

In Weiterbildung der Erfindung kann vorgesehen sein, dass die Gewindekante, sei sie nun abgeflacht oder nicht, quer verlaufende Kanten aufweist. Diese Kanten verlaufen also der zur Längsachse der Schraube.

In nochmaliger Weiterbildung der Erfindung kann vorgesehen sein, dass mindestens eine Gewindeflanke, vorzugsweise beide Gewindeflanken, abwechselnd Vor- und Rücksprünge aufweist. Während eine normale Gewindeflanken wendelartig verläuft, also mit einer glatten Oberfläche, sind hier in dieser Oberfläche Vertiefungen enthalten, deren Boden parallel zu dem restlichen Teil der Gewindeflanken verläuft, aber versetzt zu diesen.

Auf diese Weise wird es möglich, was von der Erfindung in Weiterbildung vorgeschlagen wird, dass die mindestens eine Gewindeflanke ebenfalls Kanten bildet, die etwa radial verlaufen. Diese radial verlaufenden Kanten können in Weiterbildung eine Fortsetzung der Vorderkanten der Sägezähne sein.

Erfindungsgemäß kann vorgesehen sein, dass das Gewinde eine Folge von aneinander angrenzenden seitlich versetzten Zähnen aufweist. Dabei kann vorgesehen sein, dass die radialen Kanten der Gewindeflanken bis auf den Schaft der Schraube reichen, während vorzugsweise die Kerben zwischen den Zähnen nicht bis zu dem Schaft der Schraube reichen.

Die Gewindeflanken schließen in ihrem äußeren Bereich, das heißt dem an die Gewindekante anschließenden Bereich, einen Winkel von etwa 20 bis etwa 30 Grad miteinander ein. Es handelt sich hierbei um denjenigen Bereich des Gewindes, der zum Eingriff in die Wand des Bohrlochs bestimmt ist. Zwischen der Außenseite des Schafts und der Wand des Bohrlochs bleibt ein Ringspalt stehen. In diesem Bereich kann der Winkel, den die Gewindeflanken miteinander einschließen, größer sein, um eine größere Festigkeit der Schraube zu erreichen.

Bei der Schränkung der Gewindekante kann erfindungsgemäß vorgesehen sein, dass die Zähne um die Breite ihrer Gewindefläche gegeneinander versetzt sind. Eine Abwicklung des Gewindes sieht also dann aus wie eine Reihe von seitlich versetzten Rechtecken, bei denen die rechte Kante eines Rechtecks mit der linken Kante des nächstfolgenden Rechtecks fluchtet.

Erfindungsgemäß kann vorgesehen sein, dass die Zahl der Zähne pro Gewindelänge, anders ausgedrückt die in Gewinderichtung gemessene Größe der Zähne, und/oder die Verschränkung der Zähne und/oder die Tiefe der Kerben zwischen den Zähnen über die Länge des Schraubenschafts variiert. An den Stellen, wo ein größerer Teil der Arbeit zum Herstellen des Gewindes geleistet wird, kann eine größere Verschränkung erforderlich oder sinnvoll sein, während im weiteren Bereich in Richtung auf den Schraubenkopf, wo das Gewinde dann schon hergestellt ist, eine geringere Verschränkung oder geringere Zahl von Zähnen sinnvoll sein kann.

Weitere Merkmale, Einzelheiten und Vorzüge der Erfindung ergeben sich aus den Patentansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: eine Seitenansicht einer von der Erfindung vorgeschlagenen Betonschraube;
- Figur 2: eine Aufsicht auf die Schraube von oben in Figur 1;
- Figur 3: in vergrößertem Maßstab einen schrägen Schnitt durch den Schaft der Schraube;
- Figur 4: in vergrößertem Maßstab einen in Längsrichtung gelegten Schnitt durch den Schraubenschaft im Bereich eines Ge- windegangs;
- Figur 5: eine Aufsicht auf eine Abwicklung des Gewindes.

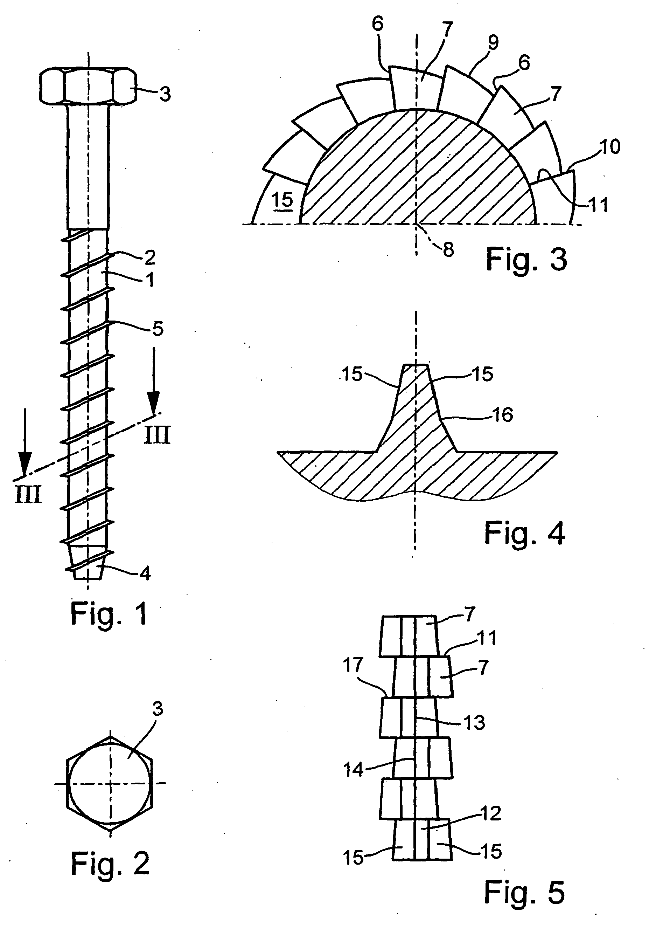

Figur 1 zeigt ganz allgemein eine Seitenansicht einer von der Erfindung vorgeschlagenen Schraube. Die Schraube enthält einen Schraubenschaft 1, der über den größten Teil seiner Länge mit einem Gewinde 2 versehen ist. An dem einen Ende des Schraubenschafts 1 ist ein Schraubenkopf 3 angeordnet, im vorliegenden Fall ein Sechskantkopf. Die Form und Größe des Schraubenkopfes ist aber nicht wesentlich für die Erfindung, da die Schraube auch mit einem anderen Kopf in Drehung versetzt werden kann.

An dem dem Schraubenkopf 3 gegenüberliegenden vorderen Ende 4 verringert sich der Durchmesser des Schraubenschafts in Form eines Kegelstumpfes.

Das Gewinde 2 weist eine konstante Ganghöhe und einen konstanten Außendurchmesser auf. Es erstreckt sich längs einer Schraubenlinie, wobei man der Figur 1 schon entnehmen kann, dass die Gewindekante 5 abgeflacht ist.

Figur 2 zeigt die Aufsicht auf den Schraubenkopf 3, bei dem es sich, wie bereits erwähnt, um einen Sechskantkopf handelt. Auch ein Kopf mit einem quer verlaufenden Schlitz für einen üblichen Schraubendreher wäre möglich.

Figur 3 zeigt nun in einem vergrößertem Maßstab einen schrägen QuerSchnitt durch die Schraube, etwa nach Linie III-III in Figur 1. Das Gewinde weist eine Außenkontur in Form eines Sägezahnprofils auf. Die jeweilige Vorderkante 6 jedes Zahns 7 verläuft auf einer Linie, die durch den Mittelpunkt des Querschnitts geht, also durch die Längsachse 8 der Schraube. Die Außenkontur 9 verläuft dann von der Vorderkante 6 ausgehend über einen geschwungenen Bogen bis zu der Vorderkante 6 des jeweils nächsten Zahns 7. Zwischen den Zähnen ist eine Kerbe 10 gebildet, deren Tiefe etwa ein Viertel der Radialerstreckung der Zähne 7 beträgt.

Die Vorderkante 6 der Zähne, bei der es sich eigentlich um eine Fläche handelt, geht in eine radial verlaufende Kante 11 der Zähne 7 über, wobei die Kante 11 entweder als Vorderkante eines Zahns oder als Hinterkante eines Zahns ausgebildet ist.

Die Anordnung der Zähne geht am besten aus Figur 5 hervor, die eine Abwicklung eines Gewindegangs etwa in Richtung des Pfeiles V in Figur 3 darstellt. Die abgeflachte Gewindekante bildet eine in der Aufsicht rechteckige Gewindefläche 12, deren Seitenkanten in Richtung der Schraubenlinie verlaufen, der das Gewinde 2 folgt. Die einzelnen Zähne 7 sind jeweils so weit gegeneinander versetzt, dass die rechte Kante 13 der Gewindefläche 12 eines Zahns mit der linken Kante 14 der Gewindefläche 12 eines benachbarten Zahns fluchtet. Beidseits der Gewindeflächen 12 sind dann die Gewindeflanken 15 zu sehen. Diese Gewindeflanken 15 verlaufen von der abgeflachten durch die Gewindefläche 12 gebildeten Gewindekante ausgehend divergierend, wobei sie in diesem Bereich einen Winkel von etwa 20 bis 30 Grad miteinander einschließen, siehe Figur 4. Diese im Querschnitt der Figur 4 geradlinig verlaufende Ausbildung der Gewindeflanken 15 reicht bis zu einer Stelle 16, wo die Gewindeflanke 15 in einen flacheren Winkel übergehen. An dieser Stelle 16 ist bei der eingeschraubten Schraube die Wand des Bohrlochs angeordnet. In dem Bereich, in dem die Gewindegänge in die Wand des Bohrlochs eingreifen, liegt der Winkel zwischen den Gewindeflanken also bei etwa 20 bis etwa 30 Grad. Nur außerhalb der Wand des Bohrlochs ist der Winkel zwischen den Gewindeflanken 15 größer.

Wie man ebenfalls der Figur 5 entnehmen kann, bilden die Vorderkanten 11 der Zähne 7 Schneidkanten, die ein Abtragen des Materials des Mauerwerks oder Betons bewirken. Man kann der Figur 5 auch entnehmen, dass die Gewindeflanken abwechselnd erhaben und vertieft ausgebildet sind, wobei die jeweiligen Flächenstücke in der Abwicklung parallel zueinander verlaufen.

## Patentansprüche

1. Schraube für harte Werkstoffe wie Beton oder Mauerwerk, mit
1.1 einem massiven Schraubenschaft (1),
1.2 einem Schraubenkopf (3) im Bereich des einen Endes des Schraubenschafts (1),
1.3 einem vorderen Schraubenende (4) sowie mit
1.4 einem Gewinde (2), das
1.5 längs des Schraubenschafts (1) mit Ausnahme des vorderen Schraubendendes (4) einen konstanten Außendurchmesser aufweist und
1.6 bei dem die Schneidzähne auf der vom Kopf abgewandten Seite des Gewindes (2) abwechselnd nach links und rechts aus der gedachten Mittellinie zwischen den beiden Flanken (15) des Gewindes (2) heraus versetzt sind.

2. Schraube nach Anspruch 1, bei der das Gewinde (2) ein Sägezahnprofil aufweist.

3. Schraube nach Anspruch 2, bei der die Vorderkante (6) der Sägezähne (7) etwa radial bezüglich der Schraubenlängsachse (8) verläuft.

4. Schraube nach einem der vorhergehenden Ansprüche, bei der die Gewindekante abgeflacht als schmale Gewindefläche (12) ausgebildet ist.

5. Schraube nach einem der vorhergehenden Ansprüche, bei der die Gewindekante quer verlaufende Kanten aufweist.

6. Schraube nach einem der vorhergehenden Ansprüche, bei der mindestens eine Gewindeflanke abwechselnd Vor- und Rücksprünge aufweist.

7. Schraube nach einem der vorhergehenden Ansprüche, bei der mindestens eine Gewindeflanke etwa radial verlaufende Kanten (11, 17) bildet.

8. Schraube nach einem der vorhergehenden Ansprüche, bei der das Gewinde (2) eine Folge von aneinander angrenzenden seitlich versetzten Zähnen (7) aufweist.

9. Schraube nach Anspruch 7 oder 8, bei der die radialen Kanten (11, 17) der Gewindeflanken (15) bis auf den Schaft (1) der Schraube reichen.

10. Schraube nach einem der Ansprüche 2 bis 9, bei der die Kerben (10) zwischen den Zähnen (7) nicht bis zu dem Schaft (1) der Schraube reichen.

11. Schraube nach einem der vorhergehenden Ansprüche, bei der die Gewindeflanken (15) in dem zum Eingriff in die Wand des Bohrlochs bestimmten Bereich einen Winkel von etwa 20 bis etwa 30 Grad miteinander einschließen.

12. Schraube nach einem der vorhergehenden Ansprüche, bei der die Gewindeflanken (15) in dem unmittelbar an den Schaft (1) angrenzenden Übergangsbereich einen Winkel von etwa 40 bis etwa 60 Grad miteinander einschließen.

13. Schraube nach einem der Ansprüche 2 bis 12, bei der die Zähne (7) um die Breite ihrer Gewindefläche (12) gegeneinander versetzt sind.

14. Schraube nach einem der vorhergehenden Ansprüche, bei der die Zahl der Zähne (7) pro Gewindelänge und/oder die Verschränkung der Zähne (7) und/oder die Tiefe der Kerben (10) zwischen den Zähnen (7) über die Länge des Schraubenschafts (1) variiert.

## Claims

1. A screw for use on hard materials, such as concrete or masonry, having
1.1 a solid shaft (1),
1.2 a head (3) in the vicinity of one end of its shaft (1),
1.3 a tip (4), and
1.4 a thread (2) that has
1.5 a constant outer diameter, except at the screw's tip (4), and
1.6 wherein the cutting teeth on that side of the thread (2) facing away from the head are alternately offset leftward and rightward of the imaginary centreline running between the two sides (15) of the thread (2).

2. A screw according to claim 1, wherein the thread (2) has a sawtooth profile.

3. A screw according to claim 2, wherein the leading edges (6) of the sawteeth (7) are roughly radially disposed with respect to the screw's longitudinal axis (8).

4. A screw according to any of the foregoing claims, wherein the thread's crest is flattened and configured in the form of a narrow land (12).

5. A screw according to any of the foregoing claims, wherein the crest of the thread has edges extending across it.

6. A screw according to any of the foregoing claims, wherein at least one side of its thread has alternating protrusions and notches.

7. A screw according to any of the foregoing claims, wherein at least one side of its thread has radially disposed edges (11, 17).

8. A screw according to any of the foregoing claims, wherein the thread (2) has a row of laterally offset, contiguous teeth (7).

9. A screw according to claim 7 or claim 8, wherein the radially disposed edges (11, 17) on the thread's sides (15) extend down to the screw's shaft (1).

10. A screw according to any of claims 2 - 9, wherein the notches (10) between the teeth (7) do not extend down to the screw's shaft.

11. A screw according to any of the foregoing claims, wherein the included angle between the thread's sides (15) is approximately 20° to 30° over that portion thereof that is intended to engage the wall of a drilled hole.

12. A screw according to any of the foregoing claims, wherein the included angle between the thread's sides (15) is approximately 40° to 60° over the transition zone immediately adjoining the screw's shaft (1).

13. A screw according to any of claims 2 - 12, wherein the teeth (7) are offset from one another by the width of the land (12) running along their crest.

14. A screw according to any of the foregoing claims, wherein the number of teeth (7) per unit thread length, and/or the set of the teeth (7), and/or the depths of the notches (10) between the teeth (7) vary/varies over the length of the screw's shaft (1).

## Revendications

1. Vis pour matériaux durs, comme le béton ou les murs, comprenant
1.1 une tige de vis massive (1),
1.2 une tête de vis (3) dans la partie de l'une des extrémités de la tige de vis (1),
1.3 une extrémité avant de vis (4) ainsi qu'
1.4 un filet (2) qui,
1.5 le long de la tige de vis (1), présente un diamètre extérieur constant, à l'exception de l'extrémité avant de vis (4) et
1.6 dans lequel les dents coupantes, sur le côté, détourné de la tête, du filet (2) sont décalées en alternance vers la gauche et vers la droite à partir de la ligne médiane imaginaire entre les deux flancs (15) du filet (2).

2. Vis selon la revendication 1, dans laquelle le filet (2) présente un profil en dents de scie.

3. Vis selon la revendication 2, dans laquelle l'arête avant (6) des dents de scie (7) s'étend à peu près radialement par rapport à l'axe longitudinal de la vis (8).

4. Vis selon l'une quelconque des revendications précédentes, dans laquelle l'arête du filet est réalisée de manière aplatie en tant qu'étroite surface filetée (12)

5. Vis selon l'une quelconque des revendications précédentes, dans laquelle l'arête du filet présente des arêtes s'étendant transversalement.

6. Vis selon l'une quelconque des revendications précédentes, dans laquelle au moins un flanc de filet présente en alternance des saillies avant et des saillies arrière.

7. Vis selon l'une quelconque des revendications précédentes, dans laquelle au moins un flanc de filet forme des arêtes (11, 17) s'étendant à peu près radialement.

8. Vis selon l'une quelconque des revendications précédentes, dans laquelle le filet (2) présente une suite de dents (7) adjacentes les unes aux autres et décalées latéralement.

9. Vis selon la revendication 7 ou 8, dans laquelle les arêtes radiales (11, 17) des flancs de filet (15) vont jusqu'à la tige (1) de la vis.

10. Vis selon l'une quelconque des revendications 2 à 9, dans laquelle les entailles (10) entre les dents (7) ne vont pas jusqu'à la tige (1) de la vis.

11. Vis selon l'une quelconque des revendications précédentes, dans laquelle les flancs de filet (15) comprennent ensemble un angle d'environ 20 à 30 degrés dans la partie destinée à la prise dans la paroi du trou percé.

12. Vis selon l'une quelconque des revendications précédentes, dans laquelle les flancs de filet (15) comprennent ensemble un angle d'environ 40 à 60 degrés dans la partie transitoire directement adjacente à la tige (1).

13. Vis selon l'une quelconque des revendications 2 à 12, dans laquelle les dents (7) sont décalées les unes contre les autres de la largeur de leur surface filetée (12).

14. Vis selon l'une quelconque des revendications précédentes, dans laquelle le nombre de dents (7) par longueur de filet et/ou l'entrecroisement des dents (7) et/ou la profondeur des entailles (10) entre les dents (7) varient sur la longueur de la tige de la vis (1).
